# EUROPEAN PATENT SPECIFICATION

(11) **EP 2 715 079 B1**
(45) Date of publication and mention of the grant of the patent: **13.07.2016**
(21) Application number: 12727892.7
(22) Date of filing: 24.05.2012
(51) Int. Cl.: F01N 3/02, F02B 37/013, F02B 37/00, F02B 39/00, F01N 3/20

(54) **EXHAUST SYSTEM AND METHOD FOR REDUCING EXHAUST GAS TEMPERATURE**
ABGASSYSTEM UND VERFAHREN ZUR REDUZIERUNG DER ABGASTEMPERATUR
SYSTÈME D'ÉCHAPPEMENT ET PROCÉDÉ POUR RÉDUIRE LA TEMPÉRATURE DE GAZ D'ÉCHAPPEMENT

(30) Priority: 03.06.2011 FI 20115541
(43) Date of publication of application: 09.04.2014
(73) Proprietor: Wärtsilä Finland Oy, 65380 Vaasa (FI)
(72) Inventor: HJORT, Andreas, FI-65100 Vaasa (FI); JÄRVI, Arto, FI-65320 Vaasa (FI); LINDE, Eirik, FI-65410 Vaasa (FI); GRÖNLUND, Fredrik, FI-65200 Vaasa (FI); SALMINEN, Heikki, FI-65100 Vaasa (FI); HYVÖNEN, Jari, FI-65450 Solf (FI); LAASANEN, Juha, FI-66400 Laihia (FI); RAUNIO, Tomi, FI-61500 Isokyrö (FI)
(74) Representative: Berggren Oy Ab
(86) International application number: PCT/FI2012/050495
(87) International publication number: WO 2012/164157

(56) References cited:
- DE-A1-102009 043 721
- FR-A1- 2 864 994
- US-B1- 6 176 082

## Description

### Technical field of the invention

The present invention relates to an exhaust system for an internal combustion engine according to the preamble of claim 1. The invention also concerns a method for reducing exhaust gas temperature before the turbine of a high-pressure turbocharger of a two-stage turbocharged internal combustion engine, as defined in the preamble of the other independent claim.

### Background of the invention

A problem with many large turbocharged internal combustion engines is too high exhaust gas temperature before the turbine of the turbocharger. The temperature needs to be limited typically to approximately 600 °C to avoid damaging of the turbocharger. If the exhaust temperature is limited by adjusting engine operating parameters, the efficiency of the engine may suffer. A typical solution for reducing the exhaust gas temperature before the turbine of the turbocharger is to introduce air into the exhaust gas flow upstream from the turbine. However, in this solution thermal energy of the exhaust gases is lost. Another problem, especially in engines with two-stage turbocharging, is that the exhaust temperature after the turbochargers is too low for selective catalytic reduction or for superheating of steam for heat recovery. Low exhaust gas temperature can also reduce the efficiency of the low-pressure turbocharger.

US 6176082 B1 discloses an internal combustion engine comprising an exhaust manifold, turbocharger and heat exchanger. The heat exchanger is arranged on the downstream side of the turbocharger. The exhaust manifold is provided with an outer shell. Exhaust gases from the heat exchanger can be conducted through the outer shell of the exhaust manifold for cooling the exhaust manifold.

### Summary of the invention

An object of the present invention is to provide an improved exhaust system for an internal combustion engine. The characterizing features of the exhaust system according to the present invention are given in the characterizing part of claim 1. Another object of the invention is to provide an improved method for reducing exhaust gas temperature before the turbine of a high-pressure turbocharger of a two-stage turbocharged internal combustion engine.

According to the present invention, the exhaust system comprises a high-pressure turbocharger, means for establishing flow communication between the cylinders of the engine and the turbine of the high-pressure turbocharger for introducing high-pressure exhaust gases into the turbine, a heat exchanger that is arranged upstream from the turbine of the high-pressure turbocharger and comprises a cooling medium duct, and means for guiding exhaust gases from the downstream side of the high-pressure turbocharger into the cooling medium duct of the heat exchanger for reducing the temperature of the high-pressure exhaust gases in the heat exchanger. The exhaust system further comprises a low-pressure turbocharger, means for establishing flow communication between the turbine of the high-pressure turbocharger and the turbine of the low-pressure turbocharger, wherein the means are connected to the cooling medium duct of the heat exchanger, and a low-pressure exhaust duct for guiding exhaust gases away from the turbine of the low-pressure turbocharger.

In the method for reducing exhaust gas temperature before a high-pressure turbocharger of a two-stage turbocharged internal combustion engine in accordance with the invention, high-pressure exhaust gases from the engine are guided through a heat exchanger to the turbine of the high-pressure turbocharger, and the temperature of the high-pressure exhaust gases is reduced in the heat exchanger by using exhaust gases from the downstream side of the high-pressure turbocharger as a cooling medium. The exhaust gases used as the cooling medium are taken downstream from the turbine of the high-pressure turbocharger and upstream from the turbine of a low-pressure turbocharger.

With the exhaust system and the method according to the invention, the exhaust temperature before the high-pressure turbocharger can be reduced, which helps to avoid damaging of the turbocharger. Exhaust gas cooling before the high-pressure turbocharger allows higher temperature for the exhaust gases coming out of the engine. This gives more room for the adjustment of different engine operating parameters, such as intake valve timing and intake air temperature. Since the low-pressure exhaust gases are used as a cooling medium, thermal energy of the exhaust gases is not wasted. The temperature of the low-pressure exhaust gases increases, which enables effective selective catalytic reduction downstream from the turbochargers. Alternatively, the exhaust gases can be used for instance for superheating steam as a part of an exhaust gas heat recovery process. Exhaust gases downstream from the turbine of the high-pressure turbocharger but upstream from the turbine of the low-pressure turbocharger are used as the cooling medium. Since the temperature of the low-pressure exhaust gases is increased before the exhaust gases are introduced into the low-pressure turbocharger, the efficiency of the low-pressure turbocharger is improved.

According to an embodiment of the invention, a catalyst device for selective catalytic reduction is arranged downstream from the cooling medium duct of the heat exchanger. The invention is especially advantageous when used in engines with selective catalytic reduction. By arranging the catalyst device downstream from the cooling medium duct of the heat exchanger, the heat transfer from the high-pressure exhaust gases to the low-pressure exhaust gases can be utilized in the form of effective selective catalytic reduction.

### Brief description of the drawings

Fig. 1 shows schematically an internal combustion engine according to an embodiment of the invention.
Fig. 2 shows schematically an internal combustion engine according to another embodiment which does not form part of the invention.

### Detailed description of the invention

Embodiments of the invention are now described in more detail with reference to the accompanying drawings.

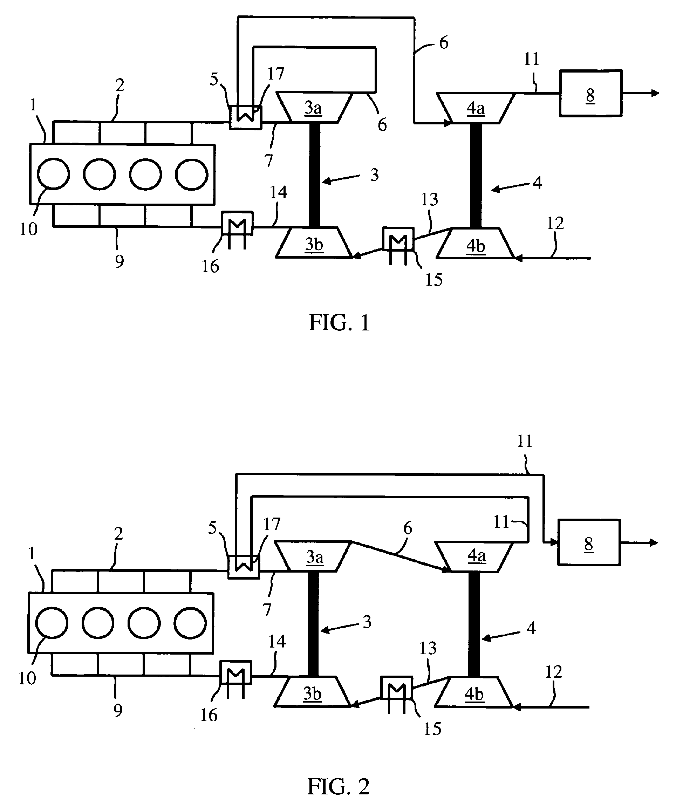

Figure 1 shows an internal combustion engine 1 according to a first embodiment of the invention. The engine 1 comprises a plurality of cylinders 10. In the embodiment of the figures 1 and 2, the engine 1 is an inline engine, but the cylinders 10 of the engine could also be arranged for instance in a V-configuration. The engine 1 can comprise any reasonable number of cylinders 10. The engine 1 is a large internal combustion engine, such as an engine that is used as a main or auxiliary engine of a ship or for producing electricity at a power plant.

The engine 1 is provided with two-stage turbocharging, and comprises thus a high-pressure turbocharger 3 and a low-pressure turbocharger 4 that are connected in series. Each of the turbochargers 3, 4 comprises a turbine 3a, 4a and a compressor 3b, 4b. Exhaust gases from the cylinders 10 of the engine 1 are collected into an exhaust manifold 2 and guided in a high-pressure exhaust duct 7 to the turbine 3a of the high-pressure turbocharger 3. From the turbine 3a of the high-pressure turbocharger 3, the exhaust gases are guided in an intermediate exhaust duct 6 to the turbine 4a of the low-pressure turbocharger 4. A catalyst device 8 that is arranged downstream from the turbine 4a of the low-pressure turbocharger 4 for selective catalytic reduction is connected to the turbine 4a with a low-pressure exhaust duct 11.

Intake air of the engine 1 is pressurized by introducing it first in a low-pressure intake duct 12 into the turbine 4b of the low-pressure turbocharger 4 and then in an intermediate intake duct 13 into the turbine 3b of the high-pressure turbocharger 3. From the high-pressure turbocharger 3, the pressurized intake air is introduced in a high-pressure intake duct 14 to the intake manifold 9 and further into the cylinders 10 of the engine 1. For reducing the temperature of the intake air, the engine 1 is provided with a first charge air cooler 15 that is arranged between the compressors 4b, 3b of the low-pressure turbocharger 4 and the high-pressure turbocharger 3, and a second charge air cooler 16 that is arranged downstream from the compressor 3b of the high-pressure turbocharger 3.

For reducing the temperature of the exhaust gases before the turbine 3a of the high-pressure turbocharger 3, the engine 1 is provided with a heat exchanger 5 that is arranged between the engine 1 and the high-pressure turbocharger 3 and provided with a cooling medium duct 17. The high-pressure exhaust gases from the engine 1 are guided in the high-pressure exhaust duct 7 through the heat exchanger 5 before being introduced into the turbine 3a of the high-pressure turbocharger 3. Low-pressure exhaust gases of the engine 1 are used as a cooling medium in the heat exchanger 5. When the exhaust gases flow through the turbine 3a of the high-pressure turbocharger 3 their temperature is reduced. The intermediate exhaust duct 6 is connected to the cooling medium duct 17 of the heat exchanger 5 for circulating the low-pressure exhaust gases through the heat exchanger 5. In the heat exchanger 5, part of the heat in the high-pressure exhaust gases is conducted to the low-pressure exhaust gases. The temperature of the high-pressure exhaust gases is thus reduced and the temperature of the low-pressure exhaust gases is increased. From the heat exchanger 5, the low-pressure exhaust gases are guided in the intermediate exhaust duct 6 to the turbine 4a of the low-pressure turbocharger 4.

By reducing the temperature of the high-pressure exhaust gases before the turbine 3a of the high-pressure turbocharger 3, damaging of the high-pressure turbocharger 3 due to excessive exhaust gas temperature can be avoided. Because it is not necessary to limit the exhaust gas temperature after the engine by adjusting different engine operating parameters, such as intake valve timing or intake air temperature, engine efficiency does not need to be compromised. Since the temperature of the low-pressure exhaust gases is increased before the turbine 4a of the low-pressure turbocharger 4, the efficiency of the low-pressure turbocharger 4 is improved. Also the exhaust gas temperature downstream from the low-pressure turbocharger 4 is increased, which enables effective selective catalytic reduction in the catalyst device 8.

In figure 2 is shown a second embodiment which does not form part of the claimed invention. The engine 1 and the intake system of the engine 1 are identical to the engine 1 and intake system of figure 1. The engine 1 is also provided with a similar heat exchanger 5 as in the embodiment of figure 1. In the embodiment of figure 2, the turbine 4a of the low-pressure turbocharger 4 is connected directly to the turbine 3a of the high-pressure turbocharger 3 with an intermediate exhaust duct 6. Also in this embodiment, the high-pressure exhaust gases are cooled by using the low-pressure exhaust gases as a cooling medium. The low-pressure exhaust duct 11 that is connected to the turbine 4a of the low pressure turbocharger 4 is connected to a cooling medium duct 17 of the heat exchanger 5. From the heat exchanger 5, the low pressure exhaust duct 11 guides the exhaust gases to a catalyst device 8 that is used for selective catalytic reduction. Since the low-pressure exhaust gases that are used as the cooling medium are taken downstream from the low-pressure turbocharger 4, the temperature difference between the low-pressure exhaust gases and the high-pressure exhaust gases is greater than in the embodiment of figure 1. More effective cooling of the exhaust gases can thus be achieved.

Instead of the catalyst device 8, or in addition to it, in both embodiments of the invention the exhaust system could be provided with additional means for heat recovery. For instance, the exhaust gases downstream from the turbine 4a of the low-pressure turbocharger 4 could be used in a power turbine or for superheating steam that is used in a heat recovery system.

It will be appreciated by a person skilled in the art that the invention is not limited to the embodiments described above, but may vary within the scope of the appended claims.

## Claims

1. An exhaust system for an internal combustion engine (1), the exhaust system comprising
- a high-pressure turbocharger (3),
- means (2, 7) for establishing flow communication between the cylinders (10) of the engine (1) and the turbine (3a) of the high-pressure turbocharger (3) for introducing high-pressure exhaust gases into the turbine (3a),
- a heat exchanger (5) that is arranged between the engine (1) and the turbine (3a) of the high-pressure turbocharger (3) and comprises a cooling medium duct (17), and
- means (6, 11) for guiding exhaust gases from the downstream side of the high-pressure turbocharger (3) into the cooling medium duct (17) of the heat exchanger (5) for reducing the temperature of the high-pressure exhaust gases in the heat exchanger (5),
**characterized in that** the exhaust system comprises
- a low-pressure turbocharger (4),
- means (6) for establishing flow communication between the turbine (3a) of the high-pressure turbocharger (3) and the turbine (4a) of the low-pressure turbocharger (4), wherein the means (6) are connected to the cooling medium duct (17) of the heat exchanger (5), and
- a low-pressure exhaust duct (11) for guiding exhaust gases away from the turbine (4a) of the low-pressure turbocharger (4).

2. An exhaust system according to claim 1, **characterized in that** a catalyst device (8) for selective catalytic reduction is arranged downstream from the cooling medium duct (17) of the heat exchanger (5).

3. A method for reducing exhaust gas temperature before a high-pressure turbocharger (3) of a two-stage turbocharged internal combustion engine (1), in which method high-pressure exhaust gases from the engine (1) are guided through a heat exchanger (5) to the turbine (3a) of the high-pressure turbocharger (3), wherein the temperature of the high-pressure exhaust gases is reduced in the heat exchanger (5) by using exhaust gases from the downstream side of the high-pressure turbocharger (3) as a cooling medium, **characterized in that** the exhaust gases used as the cooling medium are taken downstream from the turbine (3a) of the high-pressure turbocharger (3) and upstream from the turbine (4a) of a low-pressure turbocharger (4).

4. A method according to claim 3, **characterized in that** the exhaust gases used as the cooling medium are guided from the heat exchanger (5) to a catalyst device (8) for selective catalytic reduction.

## Patentansprüche

1. Abgassystem für einen Verbrennungsmotor (1), wobei das Abgassystem umfasst
- einen Hochdruckturbolader (3),
- Mittel (2, 7) zum Herstellen einer Strömungsverbindung zwischen den Zylindern (10) des Motors (1) und der Turbine (3a) des Hochdruckturboladers (3), um Hochdruckabgase in die Turbine (3a) einzuleiten,
- einen Wärmetauscher (5), der zwischen dem Motor (1) und der Turbine (3a) des Hochdruckturboladers (3) angeordnet ist und einen Kühlmediumkanal (17) umfasst, und
- Mittel (6, 11), um Abgase von der Abströmseite des Hochdruckturboladers (3) in den Kühlmediumkanal (17) des Wärmetauschers (5) zu leiten, um die Temperatur der Hochdruckabgase im Wärmetauscher (5) zu reduzieren,
**dadurch gekennzeichnet, dass** das Abgassystem umfasst
- einen Niederdruckturbolader (4),
- Mittel (6) zum Herstellen einer Strömungsverbindung zwischen der Turbine (3a) des Hochdruckturboladers (3) und der Turbine (4a) des Niederdruckturboladers (4), wobei die Mittel (6) mit dem Kühlmediumkanal (17) des Wärmetauschers (5) verbunden sind, und
- einen Niederdruckabgaskanal (11), um Abgase von der Turbine (4a) des Niederdruckturboladers (4) wegzuleiten.

2. Abgassystem nach Anspruch 1, **dadurch gekennzeichnet, dass** eine Katalysatorvorrichtung (8) für selektive katalytische Reduktion stromabwärts von dem Kühlmediumkanal (17) des Wärmetauschers (5) angeordnet ist.

3. Verfahren zum Reduzieren der Abgastemperatur vor einem Hochdruckturbolader (3) eines zweistufigen turboaufgeladenen Verbrennungsmotors (1), wobei bei dem Verfahren Hochdruckabgase von dem Motor (1) durch einen Wärmetauscher (5) zur Turbine (3a) des Hochdruckturboladers (3) geleitet werden, wobei die Temperatur der Hochdruckabgase im Wärmetauscher (5) unter Verwendung von Abgasen von der Abströmseite des Hochdruckturboladers (3) als ein Kühlmedium reduziert wird, **dadurch gekennzeichnet, dass** die Abgase, die als Kühlmedium verwendet werden, stromabwärts von der Turbine (3a) des Hochdruckturboladers (3) und stromaufwärts von der Turbine (4a) eines Niederdruckturboladers (4) hergenommen werden.

4. Verfahren nach Anspruch 3, **dadurch gekennzeichnet, dass** die Abgase, die als das Kühlmedium verwendet werden, von dem Wärmetauscher (5) für eine selektive katalytische Reduktion zu einer Katalysatorvorrichtung (8) geleitet werden.

## Revendications

1. Système d'échappement pour un moteur à combustion interne (1), le système d'échappement comprenant :
- un turbocompresseur à haute pression (3),
- des moyens (2, 7) pour établir une communication d'écoulement entre les cylindres (10) du moteur (1) et la turbine (3a) du turbocompresseur à haute pression (3) pour introduire des gaz d'échappement à haute pression dans la turbine (3a),
- un échangeur de chaleur (5) qui est disposé entre le moteur (1) et la turbine (3a) du turbocompresseur à haute pression (3) et qui comprend un conduit de milieu de refroidissement (17), et
- des moyens (6, 11) pour guider des gaz d'échappement depuis le côté en aval du turbocompresseur à haute pression (3) jusqu'à l'intérieur du conduit de milieu de refroidissement (17) de l'échangeur de chaleur (5) pour réduire la température des gaz d'échappement à haute pression dans l'échangeur de chaleur (5),
**caractérisé en ce que** le système d'échappement comprend
- un turbocompresseur à basse pression (4),
- des moyens (6) pour établir une communication d'écoulement entre la turbine (3a) du turbocompresseur à haute pression (3) et la turbine (4a) du turbocompresseur à basse pression (4), dans lequel les moyens (6) sont raccordés au conduit de milieu de refroidissement (17) de l'échangeur de chaleur (5), et
- un conduit d'échappement de basse pression (11) pour guider des gaz d'échappement en éloignement de la turbine (4a) du turbocompresseur à basse pression (4).

2. Système d'échappement selon la revendication 1, **caractérisé en ce qu'**un dispositif catalyseur (8) pour une réduction catalytique sélective est disposé en aval du conduit de milieu de refroidissement (17) de l'échangeur de chaleur (5).

3. Procédé pour réduite une température de gaz d'échappement devant un turbocompresseur à haute pression (3) d'un moteur à combustion interne turbocompressé à deux étages (1), dans lequel procédé des gaz d'échappement à haute pression du moteur (1) sont guidés à travers un échangeur de chaleur (5) vers la turbine (3a) du turbocompresseur à haute pression (3), dans lequel la température des gaz d'échappement à haute pression est réduite dans l'échangeur de chaleur (5) en utilisant des gaz d'échappement du côté en aval du turbocompresseur à haute pression (3) en tant que milieu de refroidissement, **caractérisé en ce que** les gaz d'échappement utilisés en tant que milieu de refroidissement sont pris en aval de la turbine (3a) du turbocompresseur à haute pression (3) et en amont de la turbine (4a) d'un turbocompresseur à basse pression (4).

4. Procédé selon la revendication 3, **caractérisé en ce que** les gaz d'échappement utilisés en tant que milieu de refroidissement sont guidés depuis l'échangeur de chaleur (5) vers un dispositif catalyseur (8) pour une réduction catalytique sélective.
